# EUROPEAN PATENT SPECIFICATION

(11) **EP 3 262 349 B1**
(45) Date of publication and mention of the grant of the patent: **16.10.2019**
(21) Application number: 16708321.1
(22) Date of filing: 23.02.2016
(51) Int. Cl.: A01K 1/00, G05D 23/24, F24F 11/30

(54) **SENSING DEVICE FOR CLIMATE CONTROL SYSTEM**
SENSIERUNGSVORRICHTUNG FÜR KLIMAREGELUNGSSYSTEM
DISPOSITIF DE DETECTION POUR UN SYSTÈME DE CLIMATISATION

(30) Priority: 26.02.2015 US 201562121238 P
(43) Date of publication of application: 03.01.2018
(73) Proprietor: The GSI Group, LLC, Hesston, Kansas 67062 (US)
(72) Inventor: BOUCHARD, Marco, St-Hubert, Québec J3Z 1G5 (CA); GAUDREAU, Yvon, St Hubert, Québec J3Z 1G5 (CA); BRODEUR, Jonathan, St-Hubert, Québec J3Z 1G5 (CA); LABERGE, Benoit R., St-Hubert, Québec J3Z 1G5 (CA)
(74) Representative: AGCO Intellectual Property Department
(86) International application number: PCT/US2016/019091
(87) International publication number: WO 2016/137967

(56) References cited:
- WO-A1-2007/130051
- JP-B2- 3 379 226
- US-A1- 2013 204 440
- US-A1- 2014 091 153

## Description

### CROSS REFERENCE TO RELATED APPLICATION

This application claims the benefit of U.S. Provisional Application No. 62/121,238 filed on 26 February 2015.

### BACKGROUND OF THE INVENTION

### Field of Invention

This invention relates to climate control systems for buildings used to house animals, and more particularly to a self-identifying sensing device used in such climate control systems. US2013/204440A1 (to Fadell) and JP3379226B2 (to Mitsubishi) also relate to climate control systems.

### Description of Related Art

In buildings that are used to house animals such as poultry, swine or livestock, it is important to maintain a desired building climate. A well-controlled environment involves monitoring and regulating the temperature, relative humidity and air quality in the building. For example, properly controlled temperatures enable animals to use feed for growth rather than for body heat. A properly heated animal house results in lower feed costs and increased animal productivity. Additionally, control over the level of humidity in the building is necessary because excess humidity contributes to animal discomfort and promotes the growth of harmful air born bacteria that can cause respiration diseases. Having an elevated humidity level in the animal house may also lead to more frequent changes of bedding and litter which increases production costs.

To maintain the proper climate in the animal building, various heaters and ventilation fans are used as necessary to maintain the desired temperature, humidity. It is known to use a control unit to automatically control operation of the heaters and ventilation fans located within the building. Sensing devices, such as temperature sensing devices, are used to provide the necessary information to the control unit to enable such automatic control.

In some buildings, many sensing devices are installed into the growing space to collect the data required by the control unit to enable proper climate control. The control unit is typically installed in a remote location away from the growing space of the animals in the building, whereas the sensing devices are strategically placed within the growing space around the building. In order for the control unit to automatically operate the heaters and fans based on the received data, the location of each sensing device must be provided to the control unit. As the sensing devices are strategically placed throughout the building, it is key that each sensing device be connected to the proper input terminal of the control unit so the incoming climate data is attributed to the proper location with the building. Thus, the installer has to clearly identify the physical location of each sensing device within the building and connect the corresponding connector ends into the proper terminals at the control unit in order to match the incoming data with location in the building.

One problem encountered when a building has a number of sensing devices is that it is not always readily apparent which connector wire belongs to which sensing device. For example, if the ends of the connector wires next to the control unit are not properly identified, the operator must physically trace each connector wire to its sensor, or to cause a change in the reading of an individual sensor. Typically this is done by stimulating the sensing device, such as by immersing the sensing unit in a cup of cold water, to create a signal change. This requires the operator to enter the growing space, possibly disturbing or stressing the animals. The operator must then go back to the control unit and recognize which input value has changed. These steps must then be repeated for each of the sensing devices in the building. This can be a time consuming task and also can be stressful for the animals.

It is the aim of the present invention to provide a sensing device that enables simplified identification and programing of the climate control system.

### OVERVIEW OF THE INVENTION

In one embodiment, the invention relates to a climate control system for an animal house having a plurality of climate control outputs such as heaters or ventilation fans. The climate control system includes a control unit that regulates operation of climate control outputs, the control unit having a plurality of input terminals. The climate control system also includes a plurality of sensing devices, each of the plurality of sensing devices located in a different portion of the animal house and connected to one of the plurality of input terminals of the control unit with a connector to provide a signal to the control unit which is used to control the climate in the animal house. Each sensing device includes a circuit having first and second electrical leads, the first and second leads carried by the connector to one of the plurality of input terminals of the control unit. The sensing device has a thermal resistive sensor, wherein when reading the thermal resistive sensor the control unit supplies an electric current through the thermal resistive sensor with the first lead being positive and the second lead being negative. The sensing device also has an LED wired in parallel with the thermal resistive sensor, wherein when turning on the LED, the polarity of the first and second electrical leads is reversed such that the second electrical lead is positive and the first electrical lead is negative to provide a forward voltage drop across the LED.

In another embodiment, the invention is directed to a climate control system for an animal house having a plurality of climate control outputs such as heaters or ventilation fans. The climate control system includes a control unit that regulates operation of climate control outputs, the control unit having a plurality of input terminals. The climate control system also includes a plurality of sensing devices, each of the plurality of sensing devices located in a different portion of the animal house and connected to one of the plurality of input terminals of the control unit with a connector to provide a signal to the control unit which is used to control the climate in the animal house. Each sensing device includes a circuit having first and second electrical leads, the first and second leads carried by the connector to one of the plurality of input terminals of the control unit. The sensing device has a thermal resistive sensor, wherein when reading the thermal resistive sensor the control unit supplies an electric current through the thermal resistive sensor with the first lead being positive and the second lead being negative. The sensing device also has an LED wired in parallel. A pulse signal is applied to the electrical leads to provide a forward voltage drop across the LED to turn the LED on.

In another embodiment, the invention is directed to a climate control system for an animal house having a plurality of climate control outputs such as heaters or ventilation fans. The climate control system includes a control unit that regulates operation of climate control outputs, the control unit having a plurality of input terminals. The climate control system also includes a plurality of sensing devices, each of the plurality of sensing devices located in a different portion of the animal house and connected to one of the plurality of input terminals of the control unit with a connector to provide a signal to the control unit which is used to control the climate in the animal house. Each sensing device includes a thermal resistive sensor and an indicating LED configured to be selectively turned on by the control unit to indicate when the sensing unit is connected to the control unit.

These and other features and advantages of this invention are described in, or are apparent from, the following detailed description of various example embodiments of the systems and methods according to this invention.

### BRIEF DESCRIPTION OF THE DRAWINGS

The above mentioned and other features of this invention will become more apparent and the invention itself will be better understood by reference to the following description of embodiments of the invention taken in conjunction with the accompanying drawings, wherein:
FIG. 1 is a diagrammatical block illustration of a climate control system of the present invention;
FIG. 2 is a perspective drawing of a self-identifying sensing unit of the present invention;
FIG. 3 is an electrical circuit schematic of the sensing unit of FIG 2; and
FIG. 4 is an electrical circuit schematic of an alternate embodiment of the sensing unit.
FIG. 5 is an electrical circuit schematic of an alternate embodiment of the sensing unit.

Corresponding reference characters indicate corresponding parts throughout the views of the drawings.

### DESCRIPTION OF EXAMPLE EMBODIMENTS

The invention will now be described in the following detailed description with reference to the drawings, wherein preferred embodiments are described in detail to enable practice of the invention.

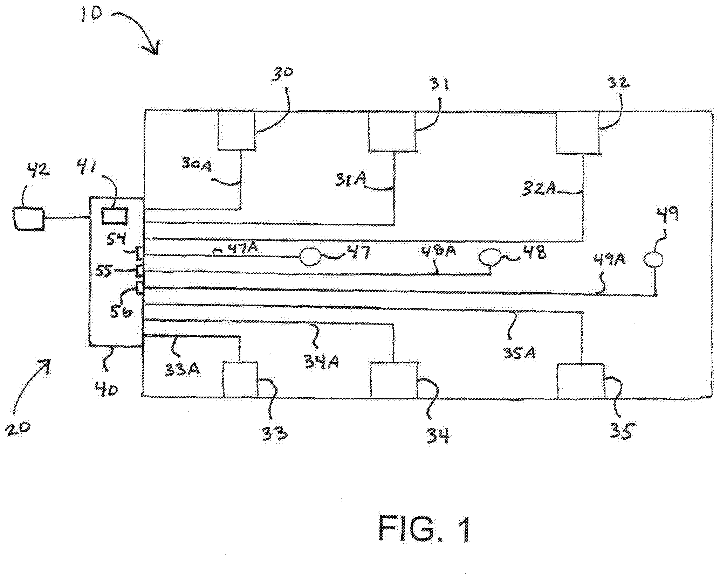

Referring to FIG. 1, a schematic of an animal house 10 of conventional design is shown. The animal house has a climate control system 20 having a plurality of climate control outputs, such as ventilation fans, indicated at 30, 31 and 32, and heater units indicated at 33, 34 and 35, mounted in the building 10. Although three heaters and three ventilating fans are shown, it will be understood that this is for purposes of illustrations only, and that additional or fewer heaters and fans may be provided, as required. The climate control system 20 has a control unit 40, which incorporates a suitable controller, such as a microprocessor main control unit 41, which regulates the operation of the ventilating fans 30, 31 and 32 and the heater units 33, 34 and 35 by way of control cables 30A-35A, respectively. The control unit receives its operating power from a suitable power supply 42.

The control unit 40 receives input from a plurality of sensing devices 47, 48 and 49 by way of connectors 47A, 48A and 49A, respectively. The sensing devices 47, 48 and 49 are located in different portions of the animal house 10 so that climate information, such as temperature, may be received for the different portions. Although only three sensing devices 47, 48 and 49 are shown, it will be understood that additional sensing devices, sometimes many more sensing devices, may be used as required to obtain the desired readings of the climate inside the animal house 10. Each sensing device 47, 48 and 49 is connected to a respective input 54, 55 and 56 to the control unit 40. As would be understood by one skilled in the art, the controller 41 in control unit 40 is adapted to regulate the operation of the fans 30, 31 and 32 and heaters 33, 34, 35 in response to specific data received from the sensing devices 47, 48 and 49, and in accordance with a program relating to the physical characteristics of the animal house 10 and needs of animals in the house. In one embodiment, the sensing devices 47, 48 and 49 are temperature sensing devices. However, one skilled in the art will understand that the sensing devices may be used to sense other climate parameters. It may be understood that sensing devices 48 and 49 can be structurally and functionally identical to sensing device 47. Therefore, while the following description is directed to sensing device 47, it should be understood that the description also applies to other sensing devices 48 and 49. As such, no further description will be given of sensing devices 48 and 49.

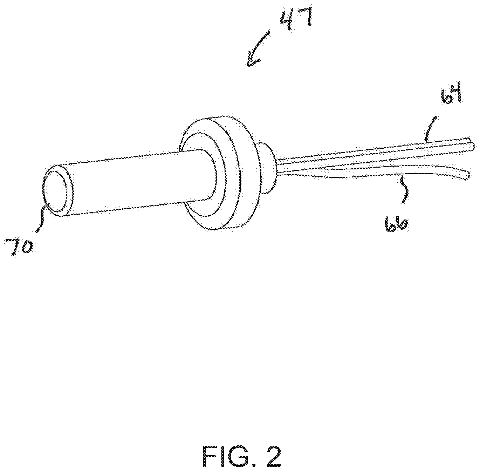

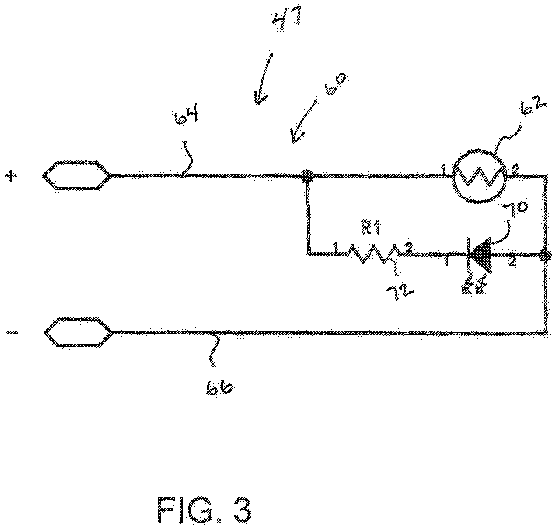

Turning also now to FIGS. 2 and 3, in the illustrated embodiment sensing device 47 is a temperature sensing device having a circuit 60 containing a thermal resistive sensor 62. The thermal resistive sensor 62 may be of any conventional design and will be understood by one skilled in the art. Therefore, a detailed description of the thermal resistive sensor 62 need not be provided herein. The circuit 60 of the sensing device 47 has first and second electrical leads 64, 66 that supply electrical power to the thermal resistive sensor 62. The first and second leads 64, 66 are carried by the connector 47A to the input 54 of the control unit 40 to connect the sensing unit 47 to the control unit 40. When reading the thermal resistive sensor 62, the control unit 40 supplies a small electric current (e.g., about 1 mA) through the sensor 62 with the first lead 64 being positive and the second lead 66 being negative. As is known in the art, the control unit 40 translates the resulting power into a temperature reading.

According to the invention, the sensing device 47 also contains an indicating device 70 in the form of at least one light source. Preferably, the indicating device 70 is an integrated LED. Electrical power is supplied to the LED 70 when the installer wants to identify the sensing device 47 connected to a particular input to the control unit 40, such as input 54. Desirably, the circuit 60 has the thermal resistive sensor 62 and LED 70 wired in parallel such that the same first and second electrical leads 64, 66 used to read the thermal resistive sensor 62 are used to power the identification LED 70. Circuit 60 desirably has a suitable resistor 72 in series with the LED 70. When the installer wants to turn on the LED 70 to identify the sensing device 47, the polarity of the first and second electrical leads 64, 66 is reversed. This can be done by physically reversing the leads attached to the input terminal of the control unit, or the control unit 40 is used to switch the polarity. When the second electrical lead 66 is positive and the first electrical lead 64 is negative, the forward voltage drop across the LED 70 provides the LED current to light the LED 70.

Accordingly, on the installer's request, the control unit 40 will light the LED 70 on the sensing device 47, making it visible from a distance. Since it can be seen from distance, the installer can identify which sensing device 47 is being connected to which input 54 on the control unit 40 without having to access the sensing device 47 directly. Therefore, the sensing device 47 can be identified without having to move into the animal growing area to stimulate the sensing device 47 in order to track its signal into the control unit 40. The installer then can quickly identify which sensing device 47, 48, 49 is connected to each input 54, 55, and 56 of the control unit 40 by individually reversing the polarity of the leads 64, 66 of each sensing device to turn on its indicating LED 70.

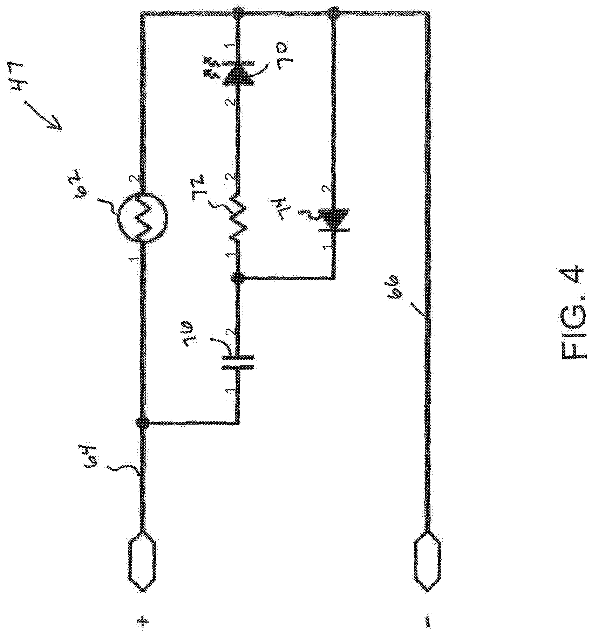

Turning now to FIG. 4, an alternate embodiment of circuit 73 for the sensing device 47 is shown with like components having the same reference numbers for clarity. Desirably, circuit 73 has the thermal resistive sensor 62 and LED 70 wired in parallel such that the same first and second electrical leads 64, 66 used to read the thermal resistive sensor 62 are used to power the identification LED 70. Circuit 73 desirably has resistor 72 in series with the LED 70. A capacitor 76 is used to AC couple the LED 70 with the thermal resistive sensor 62. When a reference DC voltage is applied (for example, 2.5 V_{DC}) to the electrical leads 64, 66, the thermal resistive sensor 62 may be read. A pulsed DC voltage is use to pass through the capacitor 76 to light the LED 70. In one embodiment, the control unit 40 generates a 0 to 5V_{DC} square wave pulse. However, one skilled in the art will understand that other pulsed voltages and even AC voltage may be used. A diode 74 is used to discharge the capacitor 76, otherwise the capacitor 76 becomes fully charged and the pulse cannot pass through and the LED 70 will not be powered. In this design, it is the change from the reference voltage to the pulsed voltage, rather than the shift in polarity as explained with reference to FIG. 3 above, that turns on the LED 70. The diode acts like a rectifier if the assembly is connected in reverse on the circuit 60. The magnitude of the voltage pulse is selected so as to not be large enough to damage the LED 70. It has been found that when the pulsed voltage is applied to turn on the LED 70, the thermal resistive sensor 62 cannot be accurately read because the pulsed voltage tends to heat up the thermal resistive sensor 62.

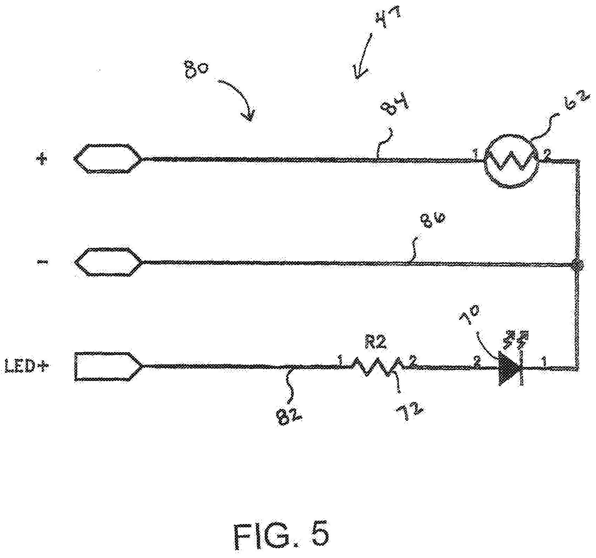

Turning now to FIG. 5, an alternate embodiment of the sensing device 47 is shown. In this embodiment, circuit 80 has three leads 82, 84, 86 connectable with the control unit 40. In this embodiment, the LED 70 has its own positive lead 82 and the thermal resistive sensor 62 has its dedicated positive lead 84 which share negative lead 86. The control unit 40 would select whether the thermal resistive sensor 62 is to be read or whether to turn on the LED 70 by selecting which positive lead is powered.

Accordingly, the climate control system 20 can be set up using the self-identifying sensing devices 47, 48 and 49. The installer can identify the sensing devices 47, 48 and 49 and critical outputs (input dependent) (e.g., heaters, fans, etc.) into the animal house 10. The installer can dress the list of input assignation relating critical outputs with the sensing devices 47, 48 and 49 they should be assigned to. The sensing devices 47, 48 and 49 are connected to input terminals 54, 55 and 56 of the control unit 40. From the control unit 40, the installer can activate the self-identifying indicator 70 for one sensing device 47, 48 or 49. The installer can then look into the animal house 10, with minimized effect on the animals therein, and identify which sensing device that is turned on. The installer can then identify the sensing device 47, 48 or 49 into the list and make any necessary corrections and program the control 41 to assign the input 54, 55 or 56 to proper output. The installer then repeats these steps for the other sensing devices 48 and 49.

The self-identifying sensing device 47 may also be used in the climate control system 20 to track and fix a bad connection on an input 54 when the control unit 40 recognizes and warns that a connection to a sensing device 47 is open or shorted even if there is no information on the specific sensing device location. The operator can tell the control unit 40 to activate the LEDs 70 on all the sensing devices 47, 48 and 49. The operator can walk into the animal house 10 and identify the sensing device without a lit LED 70.

While this invention has been described in conjunction with the specific embodiments described above, it is evident that many alternatives, combinations, modifications and variations are apparent to those skilled in the art. Accordingly, the preferred embodiments of this invention, as set forth above are intended to be illustrative only, and not in a limiting sense. Various changes can be made without departing from the scope of this invention as defined by the appended claims.

## Claims

1. A climate control system (20) for a building used as an animal house (10), the building having a plurality of climate control outputs (30 to 35) and the climate control system comprising:
a control unit (40) that regulates operation of the climate control outputs, the control unit having a plurality of input terminals (54, 55, 56);
a plurality of sensing devices (47, 48, 49), each of said plurality of sensing devices configured to be located in a different portion of the building and connected to one of the plurality of input terminals of the control unit with a connector (47A, 48A, 49A) to provide a signal to the control unit which is configured to be used to control the climate in the building, and each sensing device comprising:
a thermal resistive sensor (62), wherein when reading the thermal resistive sensor the control unit supplies an electric current through the thermal resistive sensor with the first lead (64, 84) being positive and the second lead (66, 86) being negative;
**characterized in that** each sensing device further comprises
an indicating LED (70) configured to be selectively turned on by the control unit to indicate when the sensing device is connected to the control unit.

2. The climate control system of claim 1 further comprising:
a circuit having first and second electrical leads, the first and second leads carried by the connector to one of the plurality of input terminals of the control unit;
a capacitor (76) used to couple the thermal resistive sensor with the LED; and
a diode (74) used to discharge the capacitor;
wherein the indicating LED is wired in parallel with the thermal resistive sensor, wherein when turning on the LED, when a reference DC voltage is applied to the electrical leads to read the thermal resistive sensor and wherein a pulsed DC voltage is use to light the LED.

3. The climate control system of claim 1 wherein the control unit provides a square wave pulse to light the LED.

4. The climate control system of claim 1 further comprising:
a circuit having first and second electrical leads, the first and second leads carried by the connector to one of the plurality of input terminals of the control unit;
a capacitor (76) used to couple the thermal resistive sensor with the LED; and
a diode (74) used to discharge the capacitor;
a resistor (72) in series with the LED;
wherein a reference DC voltage is applied to the electrical leads to read the thermal resistive sensor and a pulsed DC voltage is use to pass through the capacitor to light the LED and the diode is used to discharge the capacitor, preventing the capacitor from becoming fully charged thereby preventing the pulsed voltage from passing through the capacitor and triggering the LED.

5. The climate control system of claim 1 further comprising:
a circuit having first, second and third electrical leads (84, 86, 82), the first, second and third leads carried by the connector to one of the plurality of input terminals of the control unit, wherein the LED has its own positive lead (82) and the thermal resistive sensor has its dedicated positive lead (84) and share a negative lead (86), wherein the control unit selects whether the thermal resistive sensor is to be read or whether to turn on the LED by selecting which positive lead is powered.

6. A method of installing a climate control system (20) for a building used as an animal house (10), the building having a plurality of climate control outputs (30 to 35) and the climate control system comprising a control unit (400 that regulates operation of the climate control outputs and said control unit having a plurality of input terminals (54, 55, 56), the method comprising:
installing a plurality of sensing devices (47, 48, 49) in the building, each of said plurality of sensing devices located in a different portion of the building and each sensing device comprising first (64) and second (66) electrical leads, a thermal resistive sensor (62) and an indicating LED (70);
connecting each of the plurality of sensing devices to one of the plurality of input terminals of the control unit with a connector (47A, 48A, 49A) to provide a signal to the control unit which is used to control the climate in the building;
**characterized in** providing the further step of
identifying a specific sensing device of the plurality of sensing devices by triggering its indicating LED to light the LED.

7. The method of claim 6 wherein the step of identifying the specific sensing device comprises reversing the polarity of the first and second electrical leads.

## Patentansprüche

1. Klimaregelsystem (20) für ein als Tierstall (10) genutztes Gebäude, wobei das Gebäude eine Mehrzahl von Klimaregelausgängen (30 bis 35) und das Klimaregelsystem das Folgende aufweist:
eine Regeleinheit (40), die den Betrieb der Klimaregelausgänge regelt, wobei die Regeleinheit eine Mehrzahl von Eingangsterminals (54, 55, 56) aufweist;
eine Mehrzahl von Sensorvorrichtungen (47, 48, 49), von denen jede Sensorvorrichtung konfiguriert ist, um in einem anderen Teil des Gebäudes angeordnet und mit einem der Eingangsterminals der Regeleinheit über einen Verbinder (47A, 48A, 49A) verbunden zu sein, um der Regeleinheit ein Signal bereitzustellen, wobei die Regeleinheit oder das Signal konfiguriert ist, um zum Regeln des Klimas in dem Gebäude verwendet zu werden, und wobei jede Sensorvorrichtung das Folgende aufweist:
einen Wärmewiderstandssensor (62), wobei beim Auslesen des Wärmewiderstandssensors die Regeleinheit einen elektrischen Strom durch den Wärmewiderstandssensor mit einer ersten positiven Leitung (64, 84) und einer zweiten negativen Leitung (66, 86) bereitstellt;
**dadurch gekennzeichnet, dass** jede Sensorvorrichtung weiterhin das Folgende aufweist:
eine anzeigende LED (70), die konfiguriert ist, um wahlweise durch die Regeleinheit eingeschaltet zu werden, um anzuzeigen, wenn die Sensorvorrichtung mit dem Regelsystem verbunden ist.

2. Klimaregelsystem nach Anspruch 1, weiterhin mit:
einem Schaltkreis mit einer ersten und einer zweiten elektrischen Leitung, wobei die erste elektrische Leitung und die zweite elektrische Leitung durch den Verbinder zu einem der Eingangsterminals der Regeleinheit geführt werden;
einem Kondensator (76), der zum Koppeln des Wärmewiderstandssensors mit der LED verwendet wird; und
einer Diode (74), die zum Entladen des Kondensators verwendet wird;
wobei die anzeigende LED parallel zu dem Wärmewiderstandssensor geschaltet ist, wobei beim Einschalten der LED, wenn eine Referenz-Gleichspannung an den elektrischen Leitungen anliegt, um den Wärmewiderstandssensor auszulesen, und wobei eine gepulste Gleichspannung verwendet wird, um die LED zu beleuchten.

3. Klimaregelsystem nach Anspruch 1, wobei die Regeleinheit einen Rechteckwellenpuls zum Beleuchten der LED bereitstellt.

4. Klimaregelsystem nach Anspruch 1, weiterhin mit dem Folgenden:
einem Schaltkreis mit einer elektrischen Ladung und einer zweiten elektrischen Leitung, wobei die erste elektrische Leitung und die zweite elektrische Leitung durch den Verbinder zu einem der Eingangsterminals der Regeleinheit geführt werden;
einem Kondensator (76), der zum Koppeln des Wärmewiderstandssensors mit der LED verwendet wird; und
einer Diode (74), die zum Entladen des Kondensators verwendet wird;
einem in Reihe mit der LED geschalteten Widerstand;
wobei eine Referenz-Gleichspannung an den elektrischen Leitungen angelegt wird, um den Wärmewiderstandssensor auszulesen, und eine gepulste Gleichspannung verwendet wird, um durch den Kondensator hindurchzutreten, um die LED zu beleuchten, und die Diode zum Entladen des Kondensators verwendet wird, wodurch verhindert wird, dass der Kondensator vollständig geladen wird, wodurch verhindert wird, dass die gepulste Spannung durch den Kondensator hindurchtritt und die LED auslöst.

5. Klimaregelsystem nach Anspruch 1, weiterhin mit dem Folgenden:
einem Schaltkreis mit einer ersten elektrischen Leitung (84), einer zweiten elektrischen Leitung (86) und einer dritten elektrischen Leitung (82), wobei die erste, zweite und dritte Leitung durch den Verbinder zu einem der Eingangsterminals der Regelvorrichtung geführt werden, wobei die LED ihre eigene positive Leitung (82) und der Wärmewiderstandssensor seine dezidierte positive Leitung (84) aufweist und sie sich eine negative Leitung (86) teilen, wobei die Regeleinheit auswählt, ob der Wärmewiderstandssensor ausgelesen oder die LED eingeschaltet wird, indem auswählt wird, welche positive Leitung mit Energie versorgt wird.

6. Verfahren zum Installieren eines Klimaregelsystems (20) für ein als Tierstall (10) genutztes Gebäude, wobei das Gebäude eine Mehrzahl von Klimaregelausgängen (30 bis 35) und das Klimaregelsystem eine Regeleinheit (40) aufweist, die den Betrieb der Klimaregelausgänge regelt, wobei die Regeleinheit eine Mehrzahl von Eingangsterminals (54, 55, 56) aufweist; wobei das Verfahren das Folgende aufweist:
Installieren einer Mehrzahl von Sensorvorrichtungen (47, 48, 49) in dem Gebäude, wobei jede Sensorvorrichtung in einem anderen Teil des Gebäudes angeordnet ist und jede Sensorvorrichtung eine erste elektrische Leitung (64) und eine zweite elektrische Leitung (66), einen Wärmewiderstandssensor (62) und eine anzeigende LED (70) aufweist;
Verbinden jeder der Sensorvorrichtungen mit einem der Eingangsterminals und der Regeleinheit mit einem Verbinder (47A, 48A, 49A), um der Regeleinheit ein Signal bereitzustellen, das zum Regeln des Klimas in dem Gebäude gewendet wird;
**gekennzeichnet durch** das Bereitstellen des folgenden Schritts:
Identifizieren einer spezifischen Sensorvorrichtung der Mehrzahl von Sensorvorrichtungen, indem seine anzeigende LED zum Beleuchten der LED ausgelöst wird.

7. Verfahren nach Anspruch 6, wobei der Schritt des Identifizierens der spezifischen Sensorvorrichtung ein Umkehren der Polung der ersten elektrischen Leitung und der zweiten elektrischen Leitung aufweist.

## Revendications

1. Système de régulation des conditions ambiantes (20) pour un bâtiment utilisé en tant que bâtiment d'élevage (10), le bâtiment comportant une pluralité de sorties de régulation des conditions ambiantes (30 à 35) et le système de régulation des conditions ambiantes comprenant :
une unité de régulation (40) qui régule un fonctionnement des sorties de régulation des conditions ambiantes, l'unité de régulation comportant une pluralité de bornes d'entrée (54, 55, 56) ;
une pluralité de dispositifs de détection (47, 48, 49), chacun de ladite pluralité de dispositifs de détection étant configuré pour être situé dans une portion différente du bâtiment et connecté à l'une de la pluralité de bornes d'entrée de l'unité de régulation avec un connecteur (47A, 48A, 49A) pour fournir un signal à l'unité de régulation qui est configurée pour être utilisée pour réguler les conditions ambiantes dans le bâtiment, et chaque dispositif de détection comprenant :
un capteur résistif thermique (62), dans lequel lors de la lecture du capteur résistif thermique, l'unité de régulation fournit un courant électrique à travers le capteur résistif thermique, le premier fil de sortie (64, 84) étant positif et le deuxième fil de sortie (66, 86) étant négatif ;
**caractérisé en ce que** chaque dispositif de détection comprend en outre
une DEL indicatrice (70) configurée pour être activée sélectivement par l'unité de régulation pour indiquer le moment où le dispositif de détection est connecté à l'unité de régulation.

2. Système de régulation des conditions ambiantes selon la revendication 1, comprenant en outre :
un circuit ayant des premier et deuxième fils de sortie électriques, les premier et deuxième fils de sortie étant acheminés par le connecteur vers l'une de la pluralité de bornes d'entrée de l'unité de régulation ;
un condensateur (76) utilisé pour coupler le capteur résistif thermique à la DEL ; et
une diode (74) utilisée pour décharger le condensateur ;
dans lequel la DEL indicatrice est câblée en parallèle au capteur résistif thermique, dans lequel lors de l'activation de la DEL, lorsqu'une tension continue de référence est appliquée aux fils de sortie électriques pour lire le capteur résistif thermique et dans lequel une tension continue puisée est utilisée pour éclairer la DEL.

3. Système de régulation des conditions ambiantes selon la revendication 1, dans lequel l'unité de régulation fournit une impulsion à onde carrée pour éclairer la DEL.

4. Système de régulation des conditions ambiantes selon la revendication 1, comprenant en outre :
un circuit ayant des premier et deuxième fils de sortie électriques, les premier et deuxième fils de sortie étant acheminés par le connecteur vers l'une de la pluralité de bornes d'entrée de l'unité de régulation ;
un condensateur (76) utilisé pour coupler le capteur résistif thermique à la DEL ; et
une diode (74) utilisée pour décharger le condensateur ;
un résistor (72) en série avec la DEL ;
dans lequel une tension continue de référence est appliquée aux fils de sortie électriques pour lire le capteur résistif thermique et une tension continue puisée est utilisée pour passer à travers le condensateur pour éclairer la DEL et la diode est utilisée pour décharger le condensateur, empêchant le condensateur d'être totalement chargé empêchant ainsi la tension pulsée de passer à travers le condensateur et de déclencher la DEL.

5. Système de régulation des conditions ambiantes selon la revendication 1, comprenant en outre :
un circuit ayant des premier, deuxième et troisième fils de sortie électriques (84, 86, 82), les premier, deuxième et troisième fils de sortie étant acheminés par le connecteur vers l'une de la pluralité de bornes d'entrée de l'unité de régulation, dans lequel la DEL a son propre fil de sortie positif (82) et le capteur résistif thermique a son fil de sortie positif dédié (84) et ils partagent un fil de sortie négatif (86), dans lequel l'unité de régulation choisit si le capteur résistif thermique doit être lu ou s'il faut activer la DEL en choisissant quel fil de sortie positif doit être mis sous tension.

6. Procédé d'installation d'un système de régulation des conditions ambiantes (20) pour un bâtiment utilisé en tant que bâtiment d'élevage (10), le bâtiment comportant une pluralité de sorties de régulation des conditions ambiantes (30 à 35) et le système de régulation des conditions ambiantes comprenant une unité de régulation (400 qui régule un fonctionnement des sorties de régulation des conditions ambiantes et ladite unité de régulation comportant une pluralité de bornes d'entrée (54, 55, 56), le procédé comprenant :
l'installation d'une pluralité de dispositifs de détection (47, 48, 49) dans le bâtiment, chacun de ladite pluralité de dispositifs de détection étant situé dans une portion différente du bâtiment et chaque dispositif de détection comprenant des premier (64) et deuxième (66) fils de sortie électriques, un capteur résistif thermique (62) et une DEL indicatrice (70) ;
la connexion de chacun de la pluralité de dispositifs de détection à l'une de la pluralité de bornes d'entrée de l'unité de régulation avec un connecteur (47A, 48A, 49A) pour fournir un signal à l'unité de régulation qui est utilisée pour réguler les conditions ambiantes dans le bâtiment ;
**caractérisé en ce qu'**est assurée l'étape supplémentaire
d'identification d'un dispositif de détection spécifique de la pluralité de dispositifs de détection en déclenchant sa DEL indicatrice pour éclairer la DEL.

7. Procédé selon la revendication 6, dans lequel l'étape d'identification du dispositif de détection spécifique comprend l'inversion de la polarité des premier et deuxième fils de sortie électriques.
